# EUROPÄISCHE PATENTSCHRIFT

(11) **EP 0 886 898 B1**
(45) Veröffentlichungstag und Bekanntmachung des Hinweises auf die Patenterteilung: **04.10.2001**
(21) Anmeldenummer: 97904431.0
(22) Anmeldetag: 13.02.1997
(51) Int. Cl.: H02B 1/24, H02B 1/56

(54) **SCHALTSCHRANK MIT EINER EINRICHTUNG ZUM ÜBERWACHEN UND STEUERN VON EINBAU- UND/ODER ANBAUEINHEITEN**
CONTROL BOX WITH A DEVICE FOR MONITORING AND CONTROLLING BUILT-IN AND/OR FITTED COMPONENTS
ARMOIRE DE COMMANDE AVEC DISPOSITIF DE CONTROLE ET DE COMMANDE DE COMPOSANTS INCORPORES ET/OU RAPPORTES

(30) Priorität: 13.03.1996 DE 19609689
(43) Veröffentlichungstag der Anmeldung: 30.12.1998
(73) Patentinhaber: Rittal-Werk Rudolf Loh GmbH & Co. KG, 35745 Herborn (DE)
(72) Erfinder: CILIOX, Günter, D-35713 Eschenburg (DE); HAIN, Markus, D-35684 Dillenburg (DE); KREILING, Jörg, D-35444 Biebertal (DE); EDELMANN, Achim, D-35686 Dillenburg (DE)
(74) Vertreter: Fleck, Hermann-Josef, Dr.-Ing.
(86) Internationale Anmeldenummer: EP9700660
(87) Internationale Veröffentlichungsnummer: WO9734345

(56) Entgegenhaltungen:
- DE-A- 2 822 938
- DE-A- 3 326 977
- DE-U- 9 305 530

## Beschreibung

Die Erfindung bezieht sich auf einen Schaltschrank mit einer Gesamtüberwachungseinrichtung für den Schaltschrank zum Überwachen und Steuern von Einbauheinheiten und/oder Anbaueinheiten.

Ein Schaltschrank mit einer Einrichtung zum Überwachen und Steuern von die Funktion des Schaltschrankes selbst betreffenden Einbaueinheiten und/oder Anbaueinheiten ist in der Druckschrift H. Styppa: Schaltschrank-Klimatisierung: Grundlagen, Komponenten, Anwendungen, 1992, Seiten 34 bis 37 als bekannt ausgewiesen. Bei diesem bekannten Schaltschrank ist als zentrale Steuerungseinrichtung eine systemprogrammierbare Steuerung SPS mit Mikrocomputer-Regelung für ein Schaltschrank-Kühlgerät angegeben. Mit der Regelung kann eine Rundumüberwachung mit der Möglichkeit einer Systemanalyse verwirklicht werden. Die Mikrocomputer-Regelung kann in eine zentrale Leittechnik oder Anzeige- und Informationssysteme integriert werden, wobei der Leitrechner in einer von dem Schaltschrank entfernten Leitwarte untergebracht und mit dem Kühlgerät sowie der speicherprogrammierbaren Steuerung verbunden ist. Die Mikrocomputer-Regelung bezieht sich hierbei nur auf die Systemüberwachung der Kühlgerätekomponenten, wobei im Einzelnen nicht angegeben ist, welche Funktionen der Leitrechner und welche Funktionen die speicherprogrammierbare Steuerung übernimmt. Weitere, die Funktion des Schaltschrankes betreffende Einbaueinheiten und/oder Anbaueinheiten sind nicht erwähnt.

Bei einem in der DE 33 26 977 2 angegebenen Schaltschrank wird z.B. eine Einbau- oder Anbaueinheit in Form einer Klimatisierungsbaugruppe überwacht und gesteuert, insbesondere geregelt. Bei einem derartigen Schaltschrank kann die Klimatisierung nur global für das gesamte Schrankvolumen geregelt werden, und die Abstimmung auf besondere Anforderungen nicht nur hinsichtlich der Klimatisierung, sondern auch hinsichtlich anderer Funktionen des Schaltschranks ist nicht möglich.

In der DE-A 28 22 938 ist ein Schaltschrank erwähnt, in dem sich eine Steuerungseinrichtung und Überwachungselemente für Komponenten einer außerhalb des Schaltschrankes angeordneten Anlage befinden, beispielsweise einer Klimaanlage. Die außerhalb des Schaltschrankes angeordnete Anlage bezieht sich aber nicht auf die Funktion des Schaltschrankes an sich, sondern beispielsweise auf die Klimatisierung eines Gebäudes. Der Schaltschrank dient dabei nur zur Unterbringung der Steuerungseinrichtung und einiger Überwachungselemente, während andere Überwachungselemente, wie z.B. Temperatur- oder Drucksensoren, in der Anlage selbst, also außerhalb des Schaltschrankes positioniert sind.

Die DE-U 93 05 530 zeigt einen Schaltschrank mit Schalt- sowie wahlweise Steuer- und/oder Netzgeräten, die durch eine Steuerverdrahtung miteinander verbunden sind. Eine einfache, flexible Verbindungszuordnung wird mittels eines Busses zwischen den Schaltgeräten sowie Steuer- und Messgeräten hergestellt, um auch den Verdrahtungsaufwand zu verringern. Der Schaltschrank bildet ein geschlossenes System, wobei über die Art der Schaltgeräte sowie Steuer- und Messgeräte aber keine näheren Ausführungen gemacht sind und diese offenbar ebenfalls für Steuerungs- und Überwachungsaufgaben von Aggregaten dienen, die außerhalb des Schaltschrankes angeordnet sind, da zum Stand der Technik auf konventionelle Schaltschränke, die derartige Funktionen erfüllen, verwiesen ist.

Der Erfindung liegt die Aufgabe zugrunde, einen Schaltschrank bereitzustellen, der hinsichtlich Überwachung und Steuerung vielfältige Anpassungsmöglichkeiten an unterschiedliche Einsatzbedingungen bietet, wobei der Aufbau einfach ist.

Diese Aufgabe wird mit den Merkmalen des Anspruchs 1 gelöst. Hiernach ist also der Schaltschrank mit einer zentralen Steuerungseinrichtung ausgerüstet, die über Eingänge und Ausgänge mit Überwachungs- und/oder Steuerungsbaugruppen in vorgegebener oder vorgebbarer Weise verbindbar ist und mit der die Zustände der verschiedenen Einbaueinheiten und/oder Anbaueinheiten in vorgegebener oder vorgebbarer Weise individuell überwachbar, steuerbar und/oder regelbar sind, wobei die Überwachungsbaugruppen einerseits eine Sensoreinrichtung mit wahlweise mindestens einem Feuchtesensor, einem Türendschalter und einem Temperaturfühler, und andererseits eine Funktionsüberwachung mit einer Spannungsversorgungseinrichtung und einer Betriebswertüberwachung aufweisen.

Erfindungsgemäß sind also die Informationen von und zu unterschiedlichen Überwachungs- und Steuerungsbaugruppen einer zentralen Steuerungseinrichtung zusammengeführt und die Zustände der verschiedenen Einbauheinheiten bzw. Anbaueinheiten können individuell, auch in Abhängigkeit voneinander, auf jeweils gegebene Einsatzbedingungen abgestimmt werden. Auf diese Weise lässt sich der Schaltschrank sowohl im Innen- als auch im Außenbereich an ganz unterschiedliche Anforderungen anpassen, wobei die gewünschten Zustände zuverlässig überwacht und eingehalten werden.

Im Einzelnen kann dabei vorgesehen sein, dass die Sensoreinrichtung weiterhin wahlweise mindestens einen Vibrationssensor, einen Rauchsensor, einen Strom-Messwandler, einen Spannungs-Messwandler und/oder einen Kunden-Temperaturfühler aufweist. Damit können verschiedenartige Informationen bezüglich unterschiedlicher Betriebszustände und Sicherheitsmaßnahmen gewonnen und ausgewertet werden. Dabei ist die Signalweitergabe und Verarbeitung einfach ausgeführt, wenn vorgesehen ist, dass die Sensoreinrichtung über eine Eingangsschnittstelle mit der zentralen Steuerungseinrichtung in bidirektionaler Verbindung steht.

Die Funktionssicherheit des gesamten Überwachungssystems wird dabei durch die Maßnahmen verbessert, dass bei Ausfall einer Normalversorgung auf eine Notversorgung umgeschaltet wird, um programmierte Notfunktionen aufrecht zu erhalten, und dass die zentrale Steuerungseinrichtung separat gepuffert ist.

Das Klimatisierungssystem ist einfach und hinsichtlich der Steuerung und Regelung übersichtlich organisiert durch die Maßnahmen, dass die Steuerungsbaugruppen eine Regelungs- und Steuerungsschnittstelle aufweisen, die einerseits mit der zentralen Steuerungseinrichtung und andererseits mit einer Klimatisierungseinrichtung in bidirektionaler Verbindung steht, dass die Klimatisierungseinrichtung wahlweise mindestens einen Wärmetauscher, einen Lüfter, ein Kühlgerät, eine Heizung und/oder einen Kunden-Lüfter umfasst, dass die für die Regelung und Steuerung benötigten Signale in der Regelungs- und Steuerungsschnittstelle generierbar sind und dass die Klimatisierungseinrichtung entsprechend Signalen der zentralen Steuerungseinrichtung ansteuerbar ist.

Ein Einblick in die Betriebszustände und die Möglichkeit einer diesbezüglichen Ansteuerung entsprechender Ausgabeeinheiten werden dadurch erzielt, dass die Steuerungsbaugruppen eine Ausgabeschnittstelle aufweisen, die einerseits mit der zentralen Steuerungseinrichtung in bidirektionaler Verbindung steht und andererseits mit einer Ausgabeeinrichtung verbunden ist, dass die Ausgabeeinrichtung wahlweise mindestens ein Relais, einen Optokoppler, einen Bussystemausgang, einen Telemetrieausgang, einen PC-Schnittstellenausgang, einen Analogsignalausgang, eine Anzeigeneinrichtung, eine Leuchtdiodenanzeige und/oder eine Symbolanzeigeeinheit mit Symbolanzeigeelementen aufweist und daß in der Ausgabeschnittstelle Signale der zentralen Steuerungseinrichtung zum Ansprechen der Ausgabeeinrichtung umformbar sind.

Ist vorgesehen, daß mit der zentralen Steuerungseinrichtung eine Programmier- und Testeinrichtung und/oder eine Leitstelle bidirektional verbunden sind und daß mit der Programmier- und Testeinrichtung fest eingespeicherte Testprozeduren aufrufbar, bestimmte Programmteile änderbar und/oder kundenspezifische Referenzwerte eingebbar sind, so kann jederzeit auf einfache Weise eine Funktionsprüfung und Änderung von eingestellten Parametern, wie z.B. Temperatureinstellwerten, vorgenommen werden. Auf diese Weise ist auch eine Einstellung auf geänderte Bedingungen leicht möglich.

Ein übersichtlicher Aufbau wird weiterhin dadurch begünstigt, daß die zentrale Steuerungseinrichtung auf einer Hauptplatine aufgebaut ist und daß alle Ein- und Ausgänge miteinander verknüpfbar sind.

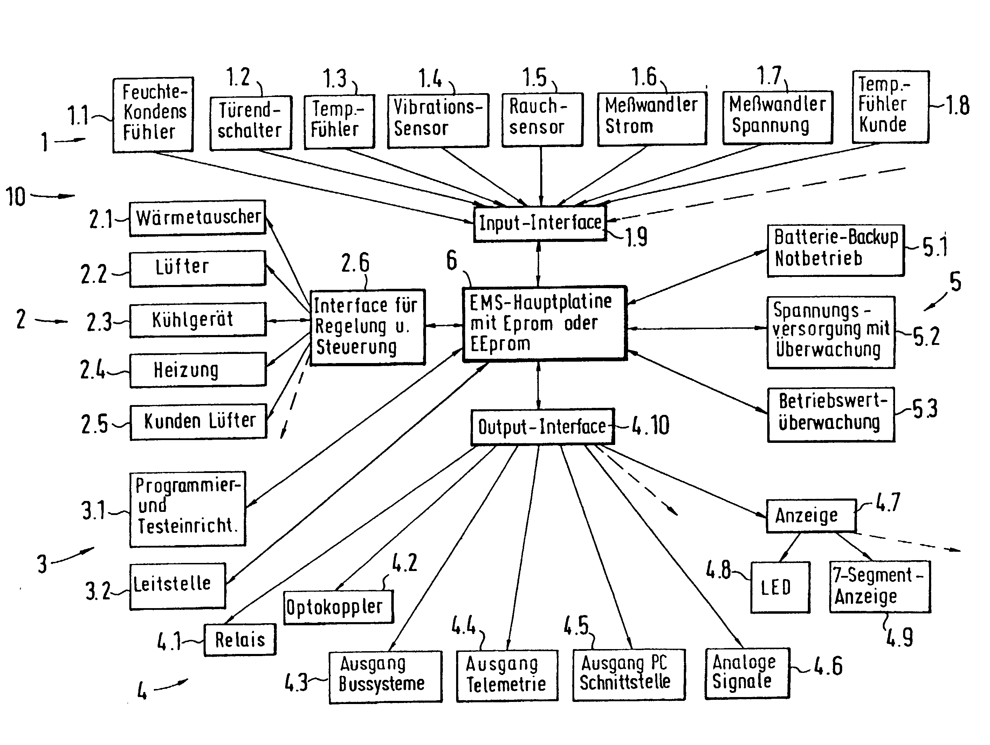

Die Erfindung wird nachfolgend anhand eines Ausführungsbeispiels unter Bezugnahme auf die Zeichnung näher erläutert.

Die Figur zeigt eine Gesamtüberwachungseinrichtung 10 für einen Schaltschrank mit einer Sensoreinrichtung 1, einer Klimatisierungseinrichtung 2, einer Kommunikationseinrichtung 3, einer Ausgabeeinrichtung 4, einer Funktionsüberwachung 5 sowie einer zentralen Steuerungseinrichtung 6. Die Sensoreinrichtung 1 ist über eine Eingangsschnittstelle 1.9 mit der zentralen Steuerungseinrichtung 6 verbunden, wobei die Verbindung zwischen der Eingangsschnittstelle 1.9 und der zentralen Steuerungseinrichtung 6 bidirektional ausgebildet ist. Die Sensoreinrichtung 1 umfaßt einen Feuchtesensor 1.1, einen Türendschalter 1.2, einen Temperaturfühler 1.3, einen Vibrationssensor 1.4, einen Rauchsensor 1.5, einen Strom- und Meßwandler 1.6, einen Spannungs-Meßwandler 1.7 und einen Kunden-Temperaturfühler 1.8. Diese einzelnen Komponenten der Sensoreinrichtung 1 sind beispielhaft angegeben und können teilweise auch fehlen oder mehrfach vorhanden sein, je nach Einsatzbedingungen und Kundenwunsch. Dazu kann der Aufbau so sein, daß ein Austausch oder eine Ergänzung leicht möglich ist. Die Eingangsschnittstelle 1.9 ist vorzugsweise auf einer Platine aufgebaut und stellt auf der einen Seite eine Spannungsversorgung für die Sensoreinrichtung 1 entsprechend der Anforderungen der einzelnen Komponenten sicher, wobei Gleich- und Wechselspannungen bereitgestellt werden können, und verarbeitet auf der anderen Seite die von den einzelnen Komponenten der Sensoreinrichtung 1 gelieferten Signale und formt sie so um, daß sie an die zentrale Steuerungseinrichtung 6 weitergeleitet werden können. Es kann zudem eine Bewertung und Gewichtung der Signale sowie eine logische Verknüpfung durchgeführt werden.

Die Klimatisierungseinrichtung 2 weist gemäß dem Ausführungsbeispiel einen Wärmetauscher 2.1, einen Lüfter 2.2, ein Kühlgerät 2.3, eine Heizung 2.4, einen Kunden-Lüfter 2.5 und eine Regelungs- und Steuerungsschnittstelle 2.6 auf. Die Regelungs- und Steuerungsschnittstelle 2.6 steht einerseits mit der zentralen Steuerungseinrichtung 6 und andererseits mit den genannten Komponenten der Klimatisierungseinrichtung 2 jeweils in bidirektionaler Verbindung. Mit Hilfe der Regelungs- und Steuerungsschnittstelle 2.6 werden die angeschlossenen Komponenten der Klimatisierungseinrichtung 2 entsprechend den Signalen der zentralen Steuerungseinrichtung 6 angesteuert. Infolge der bidirektionalen Verbindung besteht neben der Steuerung bzw. Regelung auch die Möglichkeit der Funktionsüberwachung der Klimatisierungseinrichtung 2 mit ihren einzelnen Komponenten. In der Regelungs- und Steuerungsschnittstelle 2.6 können alle für die Ansteuerung benötigten Signale selbst generiert werden, so daß der Anschluß an die zentrale Steuerungseinrichtung 6 einfach und übersichtlich ist. Der Lüfter 2.2 und der Kunden-Lüfter 2.5 können Wechselspannungs- oder Gleichspannungs-Versionen sein. Die Klimatisierungseinrichtung 2 umfaßt vorteilhafterweise auch Kompressoren, pneumatische oder hydraulische Ventile, Be- und Entfeur tungseinrichtungen, Drucksensoren und Lufströmungsüberwachungseinrichtungen. Die einzelnen Komponenten der Klimatisierungseinrichtung 2 können nach dem jeweiligen Bedarf vorhanden sein, angesteuert und geregelt werden.

Die Kommunikationseinrichtung 3 umfaßt eine Programmier- und Testeinrichtung 3.1 sowie eine Leitstelle 3.2. Die Programmier- und Testeinrichtung 3.1 kann beispielsweise über ein (nicht gezeigtes) Handmodul bedient werden. Mit der Programmier- und Testeinrichtung 3.1 können sowohl fest eingspeicherte Testprozeduren aufgerufen werden als auch bestimmte Programmteile geändert werden (z.B. nachträgliches Ändern von Temperatureinstellwerten). Weiterhin können kundenseitige Referenzwerte (z.B. für die Kalibrierung) eingegeben werden. Über die Leitstelle 3.2 können Betriebszustände von Überwachungspersonal kontrolliert und gegebenenfalls eingestellt werden.

Die Ausgabeeinrichtung 4 umfaßt ein Relais 4.1, einen Optokoppler 4.2, einen Systemausgang 4.3, einen Telemetrieausgang 4.4, einen PC-Schnittstellenausgang Regelungs- und Steuerungsschnittstelle 2.6 werden die angeschlossenen Komponenten der Klimatisierungseinrichtung 2 entsprechend den Signalen der zentralen Steuerungseinrichtung 6 angesteuert. Infolge der bidirektionalen Verbindung besteht neben der Steuerung bzw. Regelung auch die Möglichkeit der Funktionsüberwachung der Klimatisierungseinrichtung 2 mit ihren einzelnen Komponenten. In der Regelungs- und Steuerungsschnittstelle 2.6 können alle für die Ansteuerung benötigten Signale selbst generiert werden, so daß der Anschluß an die zentrale Steuerungseinrichtung 6.einfach und übersichtlich ist. Der Lüfter 2.2 und der Kunden-Lüfter 2.5 können Wechselspannungs- oder Gleichspannungs-Versionen sein. Die Klimatisierungseinrichtung 2 umfaßt vorteilhafterweise auch Kompressoren, pneumatische oder hydraulische Ventile, Be- und Entfeuchtungseinrichtungen, Drucksensoren und Lufströmungsüberwachungseinrichtungen. Die einzelnen Komponenten der Klimatisierungseinrichtung 2 können nach dem jeweiligen Bedarf vorhanden sein, angesteuert und geregelt werden.

Die Kommunikationseinrichtung 3 umfaßt eine Programmier- und Testeinrichtung 3.1 sowie eine Leitstelle 3.2. Die Programmier- und Testeinrichtung 3.1 kann beispielsweise über ein (nicht gezeigtes) Handmodul bedient werden. Mit der Programmier- und Testeinrichtung 3.1 können sowohl fest eingspeicherte Testprozeduren aufgerufen werden als auch bestimmte Programmteile geändert werden (z.B. nachträgliches Ändern von Temperatureinstellwerten). Weiterhin können kundenseitige Referenzwerte (z.B. für die Kalibrierung) eingegeben werden. Über die Leitstelle 3.2 können Betriebszustände von Überwachungspersonal kontrolliert und gegebenenfalls eingestellt werden.

Die Ausgabeeinrichtung 4 umfaßt ein Relais 4.1, einen Optokoppler 4.2, einen Systemausgang 4.3, einen Telemetrieausgang 4.4, einen PC-Schnittstellenausgang 4.5, einen Analogsignalausgang 4.6, eine Anzeigeeinrichtung 4.7, eine Leuchtdiodenanzeige 4.8, eine Symbolanzeigeeinheit mit Symbolanzeigeelementen 4.9 sowie eine Ausgabeschnittstelle 4.10. Die Ausgabeschnittstelle 4.10 steht in bidirektionaler Verbindung mit der zentralen Steuerungseinrichtung 6. Mit Hilfe der Ausgabeschnittstelle 4.10 können Informationssignale in verschiedenster Form ausgegeben werden, wie die verschiedenen Komponenten der Ausgabeeinrichtung 4 erkennen lassen. Beispielsweise können über den Telemetrieausgang 4.4 Daten an eine entfernte Überwachungsstation übermittelt werden. Über das Relais 4.1 oder den Optokoppler 4.2 können z.B. externe Meldeeinrichtungen angesprochen werden, die z.B. auf eine Funktionsstörung oder einen unberechtigten Eingriff hinweisen. Der Bussystemausgang 4.3 kann z.B. einen Feldbus oder dgl. umfassen. Der PC-Schnittstellenausgang 4.5 kann z.B. als RS 232-Schnittstelle oder dgl. ausgebildet sein. Als Anzeigeeinrichtung 4.7 können auch andere geeignete Anzeigeeinheiten, z.B. LCD-Einheiten oder ähnliche, vorgesehen sein. Der Analogsignalausgang 4.6 kann als Spannungs- oder Stromausgang ausgeführt sein.

Die Funktionsüberwachung beinhaltet eine Notversorgung 5.1, eine Normalversorgung 5.2 sowie eine Betriebsüberwachung 5.3. Die Notversorgung 5.1 stellt z.B. eine batteriegepufferte Spannungsversorgung für die Gesamtüberwachungseinrichtung 10 dar, die im Falle eines Netzausfalls bestimmte programmierte Notfunktionen bei Spannungsausfall aufrecht erhält. Die Normalversorgung 5.2, insbesondere Netz-Spannungsversorgung, wird ständig überwacht, um im Notfall direkt auf die Notversorgung 5.1 umzuschalten. Die zentrale Steuerungseinrichtung 6, die vorzugsweise auf einer Hauptplatine aufgebaut ist, ist noch einmal separat gepuffert.

Die Betriebswertüberwachung 5.3 dient sowohl als Speicher für eine Betriebsdatenerfassung (z.B. Laufzeiten) als auch als Fehlerspeicher für im Betrieb aufgetretene Fehler oder Störungen, die sich selbst zurückgesetzt haben.

Außer den beispielhaft genannten einzelnen Komponenten, der verschiedenen Einrichtungen der Gesamtüberwachungseinrichtung 10 können, soweit zweckmäßig, weitere oder andere Komponenten vorgesehen werden. Dabei ist der Anschluß an das jeweilige Interface bzw. die Verbindung mit der zentralen Steuerungseinrichtung 6 einfach möglich und die Anpassung durch entsprechende einfache Umprogrammierung der zentralen Steuerungseinrichtung 6 ebenfalls leicht durchführbar.

Die auf der Hauptplatine aufgebaute zentrale Steuerungseinrichtung 6 basiert z.B. auf einem 8-Bit Microcontrollersystem. Mit Hilfe von Speicherbausteinen, z.B. eines Eproms oder EEproms, ist die Gesamtüberwachungseinrichtung 10 in der Lage, alle Ein- und Ausgänge beliebig miteinander zu verknüpfen, so daß ohne aufwendige bauliche Änderungen sehr unterschiedliche Anpassungsmöglichkeiten gegeben sind.

## Patentansprüche

1. Schaltschrank mit einer Gesamtüberwachungseinrichtung für den Schaltschrank zum Überwachen und Steuern von Einbaueinheiten (2.1 bis 2.6, 5.1 bis 5.3) und/oder Anbaueinheiten einschließlich einer Klimatisierungseinrichtung (2) des Schaltschranks, wobei eine zentrale Steuerungseinrichtung (6) vorgesehen ist, die über Eingänge und Ausgänge mit den Überwachungs- (1.1 bis 1.9, 5.1 bis 5.3) und/oder Steuerungsbaugruppen (2.6, 4.10) in vorgegebener oder vorgebbarer Weise verbindbar ist und mit der die Zustände der verschiedenen Einbaueinheiten (2.1 bis 2.6, 5.1 bis 5.3) und/oder Anbaueinheiten in vorgegebener oder vorgebbarer Weise individuell überwachbar, steuerbar und/oder regelbar sind, wobei die Überwachungsbaugruppen einerseits eine Sensoreinrichtung (1) mit wahlweise mindestens einem Feuchtesensor (1.1), einem Türendschalter (1.2) und einem Temperaturfühler (1.3), und andererseits eine Funktionsüberwachung (5) mit einer Spannungsversorgungseinrichtung (5.1, 5.2) und einer Betriebswertüberwachung (5.3) aufweisen.

2. Schaltschrank nach Anspruch 1,
**dadurch gekennzeichnet,**
**dass** die Sensoreinrichtung (1) weiterhin wahlweise mindestens einen Vibrationssensor (1.4), einen Rauchsensor (1.5), einen Strom-Meßwandler (1.6), einen Spannungs-Meßwandler (1.7) und/oder einen Kunden-Temperaturfühler (1.8) aufweist.

3. Schaltschrank nach Anspruch 2,
**dadurch gekennzeichnet,**
**dass** die Sensoreinrichtung (2) über eine Eingangsschnittstelle (1.9) mit der zentralen Steuerungseinrichtung (6) in bidirektionaler Verbindung steht.

4. Schaltschrank nach einem der vorhergehenden Ansprüche,
**dadurch gekennzeichnet,**
**dass** bei Ausfall einer Normalversorgung (5.2) auf eine Notversorgung (5.1) umgeschaltet wird, um programmierte Notfunktionen aufrecht zu erhalten, und dass die zentrale Steuerungseinrichtung (6) separat gepuffert ist.

5. Schaltschrank nach einem der vorhergehenden Ansprüche,
**dadurch gekennzeichnet,**
**dass** die Steuerungsbaugruppen eine Regelungs- und Steuerungsschnittstelle (2.6) aufweisen, die einerseits mit der zentralen Steuerungseinrichtung (6) und andererseits mit einer Klimatisierungseinrichtung (2) in bidirektionaler Verbindung steht,
**dass** die Klimatisierungseinrichtung (2) wahlweise mindestens einen Wärmetauscher (2.1), einen Lüfter (2.2), ein Kühlgerät (2.3), eine Heizung (2.4) und/oder einen Kunden-Lüfter (2.5) umfaßt,
**dass** die für die Regelung und Steuerung benötigten Signale in der Regelungs- und Steuerungsschnittstelle (2.6) generierbar sind und
**dass** die Klimatisierungseinrichtung (2) entsprechend Signalen der zentralen Steuerungseinrichtung (6) ansteuerbar ist.

6. Schaltschrank nach einem der vorhergehenden Ansprüche,
**dadurch gekennzeichnet,**
**dass** die Steuerungsbaugruppen eine Ausgabeschnittstelle (4.10) aufweisen, die einerseits mit der zentralen Steuerungseinrichtung (6) in bidirektionaler Verbindung steht und andererseits mit einer Ausgabeeinrichtung (4) verbunden ist,
**dass** die Ausgabeeinrichtung (4) wahlweise mindestens ein Relais (4.1), einen Optokoppler (4.2), einen Bussystemausgang (4.3), einen Telemetrieausgang (4.4), einen PC-Schnittstellenausgang (4.5), einen Analogsignalausgang (4.6), eine Anzeigeneinrichtung (4.7), eine Leuchtdiodenanzeige (4.8) und/oder eine Symbolanzeigeeinheit mit Symbolanzeigeelementen (4.9) aufweist und
**dass** in der Ausgabeschnittstelle (4.10) Signale der zentralen Steuerungseinrichtung (6) zum Ansprechen der Ausgabeeinrichtung (4) umformbar sind.

7. Schaltschrank nach einem der vorhergehenden Ansprüche,
**dadurch gekennzeichnet,**
**dass** mit der zentralen Steuerungseinrichtung (6) eine Programmier- und Testeinrichtung (3.1) und/oder eine Leitstelle (3.2) bidirektional verbunden sind, und
**dass** mit der Programmier- und Testeinrichtung (3.1) fest eingespeicherte Testprozeduren aufrufbar, bestimmte Programmteile änderbar und/oder kundenspezifische Referenzwerte eingebbar sind.

8. Schaltschrank nach einem der vorhergehenden Ansprüche,
**dadurch gekennzeichnet,**
**dass** die zentrale Steuerungseinrichtung (6) auf einer Hauptplatine aufgebaut ist und
**dass** alle Ein- und Ausgänge miteinander verknüpfbar sind.

## Claims

1. Switchgear cabinet, having an overall monitoring means for the switchgear cabinet for monitoring and controlling built-in units (2.1 to 2.6, 5.1 to 5.3) and/or attachment units, including an air-conditioning means (2) for the switchgear cabinet, wherein a central control means (6) is provided, which is connectable in a prescribed or prescribable manner to the monitoring assemblies (1.1 to 1.9, 5.1 to 5.3) and/or control assemblies (2.6, 4.10) via inputs and outputs, and by means of which control means the states of the various built-in units (2.1 to 2.6, 5.1 to 5.3) and/or attachment units are individually monitorable, controllable and/or regulatable in a prescribed or prescribable manner, and wherein the monitoring assemblies have, on the one hand, a sensing means (1) with, selectively, at least one moisture sensor (1.1), a door limit switch (1.2) and a temperature gauge (1.3) and, on the other hand, a function monitoring system (5) with a power supply means (5.1, 5.2) and an operating data monitoring system (5.3).

2. Switchgear cabinet according to claim 1, **characterised in that** the sensing means (1) also selectively has at least one vibration sensor (1.4), one smoke sensor (1.5), one current measuring transformer (1.6), one voltage measuring transformer (1.7) and/or one customer temperature gauge (1.8).

3. Switchgear cabinet according to claim 2, **characterised in that** the sensing means (1) is in bidirectional communication with the central control means (6) via an input interface (1.9).

4. Switchgear cabinet according to one of the preceding claims, **characterised in that**, in the event of a normal supply means (5.2) failing, there is a switchover to an emergency supply means (5.1) in order to maintain programmed emergency functions, and **in that** the central control means (6) is separately buffered.

5. Switchgear cabinet according to one of the preceding claims, **characterised in that** the control assemblies have a regulating and controlling interface (2.6), which is in bidirectional communication with the central control means (6), on the one hand, and with an air-conditioning means (2), on the other hand, and **in that** the air-conditioning means (2) selectively includes at least one heat exchanger (2.1), one fan (2.2), one cooling apparatus (2.3), one heater (2.4) and/or one customer fan (2.5), **in that** the signals, which are required for regulating and controlling purposes, are generatable in the regulating and controlling interface (2.6), and **in that** the air-conditioning means (2) is actuatable according to signals from the central control means (6).

6. Switchgear cabinet according to one of the preceding claims, **characterised in that** the control assemblies have an output interface (4.10) which, on the one hand, is in bidirectional communication with the central control means (6) and, on the other hand, is connected to an output means (4), **in that** the output means (4) has, selectively, at least one relay (4.1), one optical coupler (4.2), one bus system output (4.3), one telemetry output (4.4), one PC interface output (4.5), one analog signal output (4.6), one display means (4.7), one light-emitting diode display (4.8) and/or one symbol displaying unit with symbol displaying elements (4.9), and **in that** signals from the central control means (6) are transformable to respond to the output means (4).

7. Switchgear cabinet according to one of the preceding claims, **characterised in that** a programming and testing means (3.1) and/or a control station (3.2) are bidirectionally connected, and **in that** permanently stored test procedures can be called-up by the programming and testing means (3.1), precise program parts can be changed by said means, and/or reference data, specific to customers, can be input.

8. Switchgear cabinet according to one of the preceding claims, **characterised in that** the central control means (6) is constructed on a main plate, and **in that** all of the inputs and outputs are interlinkable.

## Revendications

1. Armoire de commande avec un dispositif de surveillance globale pour l'armoire de commande pour surveiller et commander des unités de montage (2.1 à 2.6, 5.1 à 5.3) et/ou des unités annexes, y compris une installation de climatisation (2) de l'armoire de commande, un dispositif de commande (6) central étant prévu qui peut êtrè relié, de manière prédéterminée ou pouvant être prédéterminée, par l'intermédiaire d'entrées et de sorties, aux groupes constructifs de surveillance (1.1 à 1.9, 5.1 à 5.3) et/ou de commande (2.6, 4.10) et par laquelle les états des diverses unités de montage (2.1 à 2.6, 5.1 à 5.3) et/ou unités annexes peuvent, de manière prédéterminée ou pouvant être prédéterminée, être surveillés, être commandés et/ou être réglés,
dans laquelle les groupes constructifs de surveillance présentent d'une part un dispositif à capteurs (1) avec optionnellement au moins un capteur d'humidité (1.1), un interrupteur de fin de course de porte (1.2) et un capteur de température (1.3) et, d'autre part, une surveillance de fonction (5) avec un dispositif d'alimentation en tension (5.1, 5.2) et une surveillance de valeurs de fonctionnement (5.3).

2. Armoire de commande selon la revendication 1,
**caractérisée en ce que** le dispositif à capteurs (1) présente en outre au moins un capteur de vibrations (1.4), un capteur de fumées (1.5), un transformateur de mesure d'intensité (1.6), un transformateur de mesure de tension (1.7) et/ou un capteur de température de service (1.8).

3. Armoire de commande selon la revendication 2,
**caractérisée en ce que** le dispositif à capteurs (1) est en liaison bidirectionnelle avec le dispositif de commande (6) central par l'intermédiaire d'un interface d'entrée (1.9).

4. Armoire de commande selon l'une des revendications précédentes,
**caractérisée en ce que**, en cas d'arrêt d'une alimentation normale (5.2), on commute sur une alimentation de secours (5.1) pour maintenir des fonctions de secours programmées et
que le dispositif de commande (6) central est mis au registre tampon de manière séparée.

5. Armoire de commande selon l'une des revendications précédentes,
**caractérisée en ce que** les groupes constructifs de commande présentent un interface de réglage et de commande (2.6) qui est en liaison bidirectionnelle d'une part avec le dispositif de commande (6) central et d'autre part avec un dispositif de climatisation (2),
que le dispositif de climatisation (2) comprend optionnellement au moins un échangeur de chaleur (2.1), un ventilateur (2.2), un refroidisseur (2.3), un chauffage (2.4) et/ou un ventilateur d'entretien (2.5),
que les signaux nécessaires pour le réglage et la commande peuvent être générés dans l'interface de réglage et de commande (2.6) et
que le dispositif de climatisation (2) peut être commandé en correspondance de signaux du dispositif de commande (6) central.

6. Armoire de commande selon l'une des revendications précédentes,
**caractérisée en ce que** les groupes constructifs de commande présentent un interface de sortie (4.10) qui est d'une part en liaison bidirectionnelle avec le dispositif de commande (6) central et est d'autre part relié à un dispositif de sortie (4)
que le dispositif de sortie (4) présente optionnellement au moins un relais (4.1), un optocoupleur (4.2), une sortie de système de bus (4.3), une sortie de télémétrie (4.4), une sortie d'interface PC (4.5), une sortie de signaux analogiques (4.6), un dispositif d'affichage (4.7), un affichage à diodes luminescentes (4.8) et/ou une unité d'affichage de symboles avec des éléments d'affichage de symboles (4.9) et
que des signaux du dispositif de commande (6) central peuvent être convertis dans l'interface de sortie (4.10) pour déclencher le dispositif de sortie (4).

7. Armoire de commande selon l'une des revendications précédentes,
**caractérisée en ce qu'**un dispositif de programmation et de test (3.1) et/ou un poste de commande (3.2) sont reliés de manière bidirectionnelle au dispositif de commande (6) central et
que, par le dispositif de programmation et de test (3.1), des procédures de test mémorisées fixes peuvent être appelées, des parties de programme déterminées peuvent être modifiées et/ou des valeurs de référence spécifiques de service peuvent être introduites.

8. Armoire de commande selon l'une des revendications précédentes,
**caractérisée en ce que** le dispositif de commande (6) principal est monté sur une platine principale et
que toutes les entrées et sorties sont connectables les unes aux autres.
